# EUROPEAN PATENT SPECIFICATION

(11) **EP 2 385 870 B1**
(45) Date of publication and mention of the grant of the patent: **03.08.2016**
(21) Application number: 09836536.4
(22) Date of filing: 29.12.2009
(51) Int. Cl.: C04B 35/117, C04B 35/14, C04B 35/16, C04B 35/488, C04B 35/622, C04B 35/63, C04B 35/80, C04B 35/82, D04H 1/4218, D04H 1/49, F01N 3/021, F01N 3/28, D04H 1/488

(54) **HIGH STRENGTH BIOSOLUBLE INORGANIC FIBER INSULATION MAT**
HOCHFESTE, BIOLÖSLICHE, ANORGANISCHE FASERISOLATIONSMATTE
MATELAS ISOLANT EN FIBRES INORGANIQUES BIOSOLUBLES TRÈS RÉSISTANT

(30) Priority: 05.01.2009 US 142475 P
(43) Date of publication of application: 16.11.2011
(73) Proprietor: Unifrax I LLC, Tonawanda, NY 14150 (US)
(72) Inventor: FERNANDO, Joseph, A., Amherst, New York 14228 (US); MILLER, Kenneth, B., Lockport, New York 14094 (US)
(74) Representative: Keller, Günter
(86) International application number: PCT/US2009/006753
(87) International publication number: WO 2010/077360

(56) References cited:
- EP-A2- 1 134 479
- WO-A1-2006/055188
- WO-A1-2006/055188
- WO-A1-2010/062588
- WO-A2-03/031368
- WO-A2-2004/031544
- WO-A2-2007/143437
- US-A1- 2004 234 436
- US-A1- 2009 060 802
- US-B1- 6 726 884
- US-B2- 6 953 757

## Description

### TECHNICAL FIELD

A high temperature resistant, vibration resistant insulation mat is provided comprising bio-soluble inorganic fibers, suitable for use in automotive exhaust systems.

### BACKGROUND

Catalytic converters and/or catalyzed diesel particulate filters are conventionally included in the exhaust system of automotive vehicles to reduce the level of pollutants discharged to the air. While catalytic converters used today perform satisfactorily once their light-off temperature is reached, a pollution problem exists during the light-off period. For example, it has been determined that the majority of the pollutants exhausted to the atmosphere from an automotive exhaust system which includes a catalytic converter are formed during the light-off period.

As used herein, the light-off temperature is the temperature at which a catalytic converter catalyzes the reaction that takes place in the converter with the exhaust gases. The catalytic light-off period is the time required for the catalytic converter to reach its light-off temperature.

If the heat of exhaust gases traveling from the engine to the catalytic converter can be retained for a longer period of time than in conventional exhaust systems, the time required for the light-off temperature to be reached will be reduced. This would reduce the duration of time that exhaust pollutants pass through the exhaust system without being catalyzed, and in turn would reduce the amount of pollutants released to the atmosphere.

The use of an insulated automotive exhaust system pipe to retain the heat of exhaust gases, at least prior to their contacting the catalytic converter or other catalytic exhaust gas purification device, would reduce the light-off period and would be beneficial in reducing the amount of pollutants discharged to the atmosphere. For example, an insulated exhaust pipe may be used in the exhaust system of a vehicle powered by an internal combustion engine to connect the engine to the catalytic converter.

It is known to insulate automotive engine exhaust pipes by utilizing a concentric tube-in-tube structure, with the space between the tubes containing insulation material. It is has also been proposed to utilize an insulation blanket or mat outside of the exhaust pipe. Mats proposed for this use include mats composed of leached silica fibers and mats composed of polycrystalline ceramic fibers.

Leached silica mats, however, have a limited allowable temperature exposure and a significant disadvantage in the percentage thermal shrinkage that these mats experience when exposed to elevated temperatures. Polycrystalline alumina fiber mats are generally much more expensive and have the added disadvantage of exhibiting poor vibration performance. When the polycrystalline alumina fiber mats are heated in operation, the organic binder used in preparing the mats is burned out. These mats will then expand and come apart if not adequately restrained under pressure.

WO 03/031368 discloses compositions that include a mixture of biosoluble inorganic fibers and a micaceous binder.

EP 1 134 479 discloses a burn through resistant fire barrier for use in a thermal and/or acoustical insulation blanket system used in commercial aircraft.

WO 2006/055188 discloses pollution control devices and inorganic fiber sheet materials having at least one group of two or more fibers fused together.

It is desirable to provide an insulation mat for automotive exhaust systems, which can be easily handled and installed, and which minimize the regulatory issues associated with the inhalation of more traditionally used durable refractory ceramic oxide fibers.

### BRIEF DESCRIPTION OF THE DRAWINGS

Fig. 1 is a schematic, cross-sectional view of a portion of an automotive exhaust gas treatment system.
Fig. 2 is a schematic, expanded cross-sectional view of a wet mat undergoing a needling operation.
Fig. 3 is a schematic elevational view of an experimental thermal analysis test setup.
Fig. 4 is a graph showing linear shrinkage of insulation mats after thermal exposure.
Fig. 5 is a graph showing tensile strength of insulation mats before and after thermal exposure.

### DETAILED DESCRIPTION

A high temperature resistant, vibration resistant insulation mat is provided, comprising high temperature resistant inorganic fibers, suitable for use in automotive exhaust systems. The insulation mat of the present invention is defined in the claims. The mat comprises bio-soluble inorganic fibers, in certain embodiments resistant up to 1100°C.

The insulation mat is adapted to contain thermal energy within automotive exhaust systems, so as to allow catalytic converters and/or catalyzed diesel particulate filters (DPF's) to function optimally. That is, the mat contributes to the thermal management and insulation of 'hot-end' automotive exhaust systems, containing the thermal energy within the exhaust system so as to make the catalysis more efficient in a catalytic converter or diesel particulate filter.

For example, the insulation mat may be used to insulate exhaust pipes used to deliver exhaust gases from an internal combustion engine to a catalytic converter in an automotive exhaust system, and may be adapted to permit the exhaust gases to reach the light-off temperature of the catalytic converter in a short time, and to maintain the catalysis temperature during operation of the engine.

Further, the insulation mat as described herein may be used as cone insulation for an exhaust gas treatment device. For example, an exhaust gas treatment device typically comprises a housing, a fragile structure positioned within the housing, a mounting mat disposed between the fragile structure and the housing, and inlet and outlet end cone assemblies for attaching exhaust pipes or conduits to the housing. Each end cone assembly typically comprises an inner end cone housing, an outer end cone housing, and end cone insulation that is disposed within the gap or space between the inner and outer end cone housings. End cone insulation is typically provided to prevent the radiation of heat from the end cone region of the exhaust gas treatment device and to protect the end cone-facing edges of the mounting mat disposed between the fragile structure and the housing of the exhaust gas treatment device from exposure to hot exhaust gases.

According to further embodiments, the insulation mat may be self-supporting for disposition within an end cone of an exhaust gas treatment device comprising an outer metallic cone and the self-supporting cone insulation. According to this embodiment, the end cone assembly is not provided with an inner metallic cone.

The insulation mat may also be used to thermally insulate other sections of the automotive exhaust system for safety reasons, and/or to protect and insulate the surrounding electrical and plastic components.

The insulation mat comprises a generally integral, substantially non-expanding layer, ply or sheet of high temperature resistant, biosoluble inorganic alkaline earth silicate fibers.

By "substantially non-expanding" it is meant that the insulation mat does not readily expand upon the application of heat as would be expected with intumescent material containing mats. Of course, some expansion of the mat does occur based upon its thermal coefficient of expansion, but the amount of expansion is insubstantial and *de minimus* as compared to the expansion of mats employing useful amounts of intumescent material.

The term "biosoluble inorganic fiber" refers to inorganic fibers that are soluble or otherwise decomposable in a physiological medium or in a simulated physiological medium such as simulated lung fluid, saline solutions, buffered saline solutions, or the like. The solubility of the fibers may be evaluated by measuring the solubility of the fibers in a simulated physiological medium as a function of time. Biosolubility can also be estimated by observing the effects of direct implantation of the fibers in test animals or by the examination of animals or humans that have been exposed to fibers, i.e. biopersistence. A method for measuring the biosolubility (i.e. the non-durability) of the fibers in physiological media is disclosed in U.S. Patent No. 5,874,375 assigned to Unifrax I LLC, which is incorporated herein by reference. Other methods are suitable for evaluating the biosolubility of inorganic fibers. According to certain embodiments, the biosoluble fibers exhibit a solubility of at least 30 ng/cm²-hr when exposed as a 0.1 g sample to a 0.3 ml/min flow of simulated lung fluid at 37°C. According to other embodiments, the biosoluble inorganic fibers may exhibit a solubility of at least 50 ng/cm²-hr, or at least 100 ng/cm²-hr, or at least 1000 ng/cm²-hr when exposed as a 0.1 g sample to a 0.3 ml/min flow of simulated lung fluid at 37°C. Another approach to estimating the biosolubility of fibers is based on the composition of the fibers. For example, Germany classifies respirable inorganic oxide fibers based on a compositional index (KI value). The KI value is calculated by a summation of the weight percentages of alkaline and alkaline-earth oxides and subtraction of two times the weight percent of aluminum oxide in inorganic oxide fibers. Inorganic fibers that are biosoluble typically have a KI value of about 40 or greater.

Without limitation, suitable examples of biosoluble inorganic fibers that can be used to prepare an insulation mat for the various parts of an automotive exhaust system, including but not limited to downpipe insulation and end cone insulation, include those biosoluble inorganic fibers disclosed in U.S. Patent Nos. 6,953,757, 6,030,910, 6,025,288, 5,874,375, 5,585,312, 5,332,699, 5,714,421, 7,259,118, 7,153,796, 6,861,381, 5,955,389, 5,928,075, 5,821,183, and 5,811,360. According to certain embodiments, the biosoluble alkaline earth silicate fibers may comprise the fiberization product of a mixture of oxides of magnesium and silica. These fibers are commonly referred to as magnesium-silicate fibers. The magnesium-silicate fibers generally comprise the fiberization product of about 60 to about 90 weight percent silica, from greater than 0 to about 35 weight percent magnesia and 5 weight percent or less impurities. According to certain embodiments, the alkaline earth silicate fibers comprise the fiberization product of about 65 to about 86 weight percent silica, about 14 to about 35 weight percent magnesia, 0 to about 7 weight percent zirconia and 5 weight percent or less impurities. According to other embodiments, the alkaline earth silicate fibers comprise the fiberization product of about 70 to about 86 weight percent silica, about 14 to about 30 weight percent magnesia, and 5 weight percent or less impurities. A suitable magnesium-silicate fiber is commercially available from Unifrax I LLC (Niagara Falls, New York) under the registered trademark ISOFRAX®. Commercially available ISOFRAX fibers generally comprise the fiberization product of about 70 to about 80 weight percent silica, about 18 to about 27 weight percent magnesia and 4 weight percent or less impurities.

According to certain embodiments, the biosoluble alkaline earth silicate fibers may comprise the fiberization product of a mixture of oxides of calcium, magnesium and silica. These fibers are commonly referred to as calcia-magnesia-silicate fibers. According to certain embodiments, the calcia-magnesia-silicate fibers comprise the fiberization product of about 45 to about 90 weight percent silica, from greater than 0 to about 45 weight percent calcia, from greater than 0 to about 35 weight percent magnesia, and 10 weight percent or less impurities. Useful calcia-magnesia-silicate fibers are commercially available from Unifrax I LLC (Niagara Falls, New York) under the registered trademark INSULFRAX. INSULFRAX® fibers generally comprise the fiberization product of about 61 to about 67 weight percent silica, from about 27 to about 33 weight percent calcia, and from about 2 to about 7 weight percent magnesia.

Other suitable calcia-magnesia-silicate fibers are commercially available from Thermal Ceramics (Augusta, Georgia) under the trade designations SUPERWOOL 607 and SUPERWOOL 607 MAX. SUPERWOOL 607 fibers comprise about 60 to about 70 weight percent silica, from about 25 to about 35 weight percent calcia, and from about 4 to about 7 weight percent magnesia, and trace amounts of alumina. SUPERWOOL 607 MAX fibers comprise about 60 to about 70 weight percent silica, from about 16 to about 22 weight percent calcia, and from about 12 to about 19 weight percent magnesia, and trace amounts of alumina.

The insulation mats includes a binder or mixture of more than one type of binder. Suitable binders include organic binders, inorganic binders and mixtures of these two types of binders. According to certain embodiments, the insulation mats include one or more organic binders. The organic binders may be provided as a solid, a liquid, a solution, a dispersion, a latex, or similar form. The organic binder may comprise a thermoplastic or thermoset binder, which after cure is a flexible material that can optionally, be burned out of an installed insulation mat. Examples of suitable organic binders include, but are not limited to, aqueous based latexes of acrylic or (meth)acrylic, copolymers of styrene and butadiene, vinylpyridine, acrylonitrile, copolymers of acrylonitrile and styrene, vinyl chloride, polyurethane, copolymers of vinyl acetate and ethylene, polyamides, silicones, and the like. Other resins include low temperature, flexible thermosetting resins such as unsaturated polyesters, epoxy resins and polyvinyl esters (such as polyvinylacetate or polyvinylbutyrate latexes).

The organic binder may be included in the insulation mat in an amount of 0 to about 20 weight percent based on the total weight of the insulation mat. The absence of organic binder, or the use of lower amounts such as from about 1 to about 10 weight percent, help to eliminate or reduce off-gassing, that results from binder burnout during the first startup of the vehicle.

Solvents for the binders, if needed, can include water or a suitable organic solvent, such as acetone, for the binder utilized. Solution strength of the binder in the solvent (if used) can be determined by conventional methods based on the binder loading desired and the workability of the binder system (viscosity, solids content, etc.).

The insulation mat may include polymeric binder fibers instead of, or in combination with, the resinous or liquid binder. These polymeric binder fibers, if present, may be used in amounts ranging from greater than 0 to about 20 percent by weight, from about 1 to about 15 weight percent, or from about 2 to about 10 weight percent, based upon 100 percent by weight of the total composition, to aid in binding the inorganic, biosoluble fibers together. Suitable examples of binder fibers include polyvinyl alcohol fibers, polyolefin fibers such as polyethylene and polypropylene, acrylic fibers, polyester fibers, ethyl vinyl acetate fibers, nylon fibers or combinations thereof.

In addition to organic binders, the insulation mats include inorganic binder material. The inorganic binder materials include colloidal silica, colloidal alumina, colloidal zirconia, or mixtures thereof. Colloidal silicas, such as those available from Nalco Chemical Company, are stable dispersions of nanometer size silica particles in water or other liquid medium. Colloidal silica particle sizes may range from about four to about 100 nanometers in diameter. The colloidal silica may be stabilized, such as with sodium or ammonium ions, and may have a pH range of about 2 to about 12.

Other suitable optional inorganic binder materials include calcined and/or uncalcined clay as an aid to the wet-forming process, such as but not be limited to, attapulgite, ball clay, bentonite, hectorite, kaolininte, kyanite, montmorillonite, palygorskite, saponite, sepiolite, sillimanite, or combinations thereof. Clay inorganic binder particle sizes may be about 150 microns or less, in certain embodiments less than about 45 microns.

According to certain embodiments, the insulation mat may optionally comprise other known non-respirable inorganic fibers (secondary inorganic fibers) such as silica fibers, leached silica fibers (bulk or chopped continuous), S-glass fibers, S2 glass fibers, E-glass fibers, fiberglass fibers, chopped continuous mineral fibers (including but not limited to basalt or diabasic fibers) and combinations thereof and the like, suitable for the particular temperature applications desired. Such inorganic fibers may be added to the insulating mat in quantities of from greater than 0 to about 40 percent by weight, based upon 100 percent by weight of the total mat.

The secondary inorganic fibers are commercially available. For example, leached silica fibers may be leached using any techniques known in the art, such as by subjecting glass fibers to an acid solution or other solution suitable for extracting the non-siliceous oxides and other components from the fibers. A process for making leached glass fibers is contained in U.S. Patent No. 2,624,658 and in European Patent Application Publication No. 0973697. Leached glass fibers are available under the trademark BELCOTEX from BelChem Fiber Materials GmbH, Germany, under the registered trademark REFRASIL from Hitco Carbon Composites, Inc. of Gardena California, and under the designation PS-23(R) from Polotsk-Steklovolokno, Republic of Belarus.

S2-GLASS fibers typically contain from about 64 to about 66 percent silica, from about 24 to about 25 percent alumina, and from about 9 to about 10 percent magnesia. S2-GLASS fibers are commercially available from Owens Corning, Toledo, Ohio.

In one embodiment, the insulation mat is prepared by a papermaking process, in which the fibers may be mixed with a binder or other binder fibers to form a mixture or slurry. The fibrous components may be mixed at about a 0.25% to 5% consistency or solids content (0.25-5 parts solids to 99.75-95 parts water). The slurry may then be diluted with water to enhance formation, and it may finally be flocculated with a flocculating agent and drainage retention aid chemicals. Other typical papermaking components or chemicals may be present, such as viscosity modifiers, binders, and the like. The flocculated mixture or slurry may be placed onto a papermaking machine to be formed into a ply or sheet of fiber containing paper. For a more detailed description of papermaking techniques, see U.S. Patent No. 3,458,329, the disclosure of which is incorporated herein by reference. The insulation mat can alternatively be formed by vacuum casting the slurry.

In one embodiment of the process for making the subject insulation mat, the high temperature resistant fibers and organic/inorganic binders are wet-laid on a Rotoformer, and the still wet paper or sheet is then processed through a "needler", prior to being fed through a drying oven. This process includes needle punching the fibers so as to intertwine and entangle them, while still wet with the aqueous paper-making solution or slurry, prior to drying the sheet. The resulting insulation mat is therefore densified and strengthened as compared to prior art insulating sheets.

In typical fiber needling operations (usually immediately after the fiberizing step), a lubricating liquid (normally an oil or other lubricating organic material) is used to prevent fiber breakage and to aid in fiber movement and entanglement. In the present process, it is the water from the wet-forming, paper-making process that is used to aid the process of needling.

By needling, it is meant any operation that will cause the fibers to be displaced from the horizontal within the paper or sheet, and extend for some length between the opposing surfaces of the paper or sheet. A needling apparatus typically includes a horizontal surface on which a web of fibers is laid or moves, and a needle board which carries an array of downwardly extending needles. The needle board reciprocates the needles into, and out of, the web, and reorients some of the fibers of the web into planes substantially transverse to the surfaces of the web. The needles can push fibers through the web from one direction, or for example, by use of barbs on the needles, can both push fibers from the top and pull fibers from the bottom of the web. There is typically provided physical entanglement of the fibers by full or partial penetration of the fiber paper or sheet by the barbed needles.

Additionally or alternatively, hydro-entangling methods may be used to intertwine and entangle the fibers. In a hydro-entanglement process, small, high intensity jets of water are impinged on a layer or sheet of loose fibers, with the fibers being supported on a perforated surface, such as a wire screen or perforated drum. The liquid jets cause the fibers, being relatively short and having loose ends, to become rearranged, with at least some portions of the fibers becoming physically entangled, wrapped, and/or intertwined around each other.

In certain embodiments, the high temperature resistant biosoluble inorganic fibers, such as ISOFRAX alkaline earth silicate fibers, may have an average diameter of about 1 micron to about 3.5 microns; in some embodiments, about 2 to about 2.5 microns. The secondary inorganic fibers, such as S2 glass fibers may have an average diameter of about 5 microns to about 15 microns; in some embodiments, about 9 microns.

Alkaline earth silicate fibers may range in length from being too short to be effectively needled, to long enough to be needled, entangled and entwined. In certain embodiments, by the indirect length measuring method of Settled Volume (SV), the biosoluble inorganic fiber has a minimum length corresponding to a minimum SV of 300 ml. Secondary inorganic fibers, such as S2 glass fibers, may have an average length of from about 1/8 inch to about 1.5 inches; in some embodiments, about 0.5 inch.

In certain embodiments, the secondary fibers may assist with tensile strength and overall 'web strength' by contributing to a composite system whereby the longer secondary fibers assist in the needling of the fiber mixture. Without intending to be bound by theory, it is thought that the longer secondary inorganic fibers assist in forming a structure, or 'scaffolding' that holds all the fibers together.

After the needling or hydro-entangling of the still wet paper or vacuum-cast mat, the mat is dried in an oven, for example but not limitation, at about 80°C to about 700°C.

The insulation mats can be provided in roll form, or can be die cut. The insulation mats are operable as resilient insulating sheets in a thin profile, providing ease of handling, and in a flexible form, so as to be able to provide a total wrap of at least a portion of the exhaust gas assembly, if desired, without cracking.

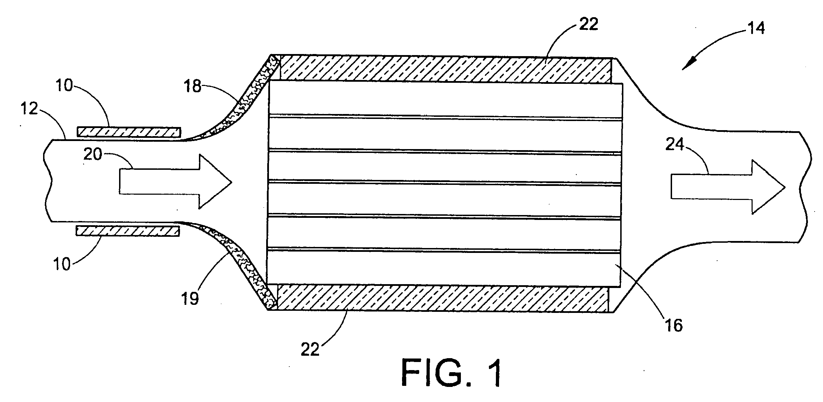

As shown in Fig. 1, in one embodiment, the interlocking fiber insulation mat 10 is adapted to be disposed about the external surface of an automotive exhaust pipe 12 which connects the engine with an exhaust gas treatment device 14 such as a catalytic converter, or as depicted, a diesel particulate filter (DPF), which may comprise a silicon carbide (SiC) substrate 16. The interlocking fiber insulation mat 10 is therefore exposed to the hot end of the exhaust system, proximate to the hot exhaust gases 20 exiting the internal combustion engine (not shown).

The insulation mat 10 therefore assists in maintaining the heat of the gases 20 until they pass through the exhaust gas treatment device 14. Cone insulation 18, internal or external to the inlet connector 19 between the exhaust pipe 12 and the exhaust gas treatment device 14, may also thermally isolate the hot exhaust gases 20 from the external environment. Cone insulation 18 may comprise an interlocking fiber insulation mat similar or identical to insulation mat 10, or may alternatively comprise a fiber composition different from the interlocking fiber insulation mat 10.

The still hot exhaust gases 20 pass through the exhaust gas treatment device 14, such as a diesel particulate filter (DPF) having a silicon carbide (SiC) substrate 16, which may be mounted in the exhaust gas treatment device 14 by an insulating support mat 22. The support mat 22 has required characteristics other than those of the insulation mat 10. As the exhaust gases 20 pass through the exhaust gas treatment device 14, they are substantially completely converted to CO₂, H₂O and N₂ gases 24.

### EXAMPLES (NOT PART OF THE INVENTION)

Insulation mats were prepared according to the following formulation and process, and were tested under conditions typically used for testing automotive exhaust downpipe insulation products.

| Formulation | |
|---|---|
| Washed Isofrax alkaline earth silicate fiber | 77% |
| 1/2 inch chopped S2 glass fiber | 15% |
| Bentonite clay | 3% |
| Acrylic Resin Latex Binder | 5% |

| Rotoformer papermaking process | |
|---|---|
| Washed fiber, | |
| Added clay, S2 glass fiber, binder, flocculent, | |
| Wet-formed on Rotoformer drum, | |
| Wet needled, | |
| Oven dried, | |
| Rolled or prepared sheets from the mat product. | |
| Quality testing. | |

The wet needling step allows very brittle fiber to be woven without significant breakage. The wet needling further provides high strength, even after the organic binder has been burned out as in during the test procedure discussed below or the initial operation of the vehicle, which results in the mat remaining durable even under vibration conditions experienced by an automotive exhaust system.

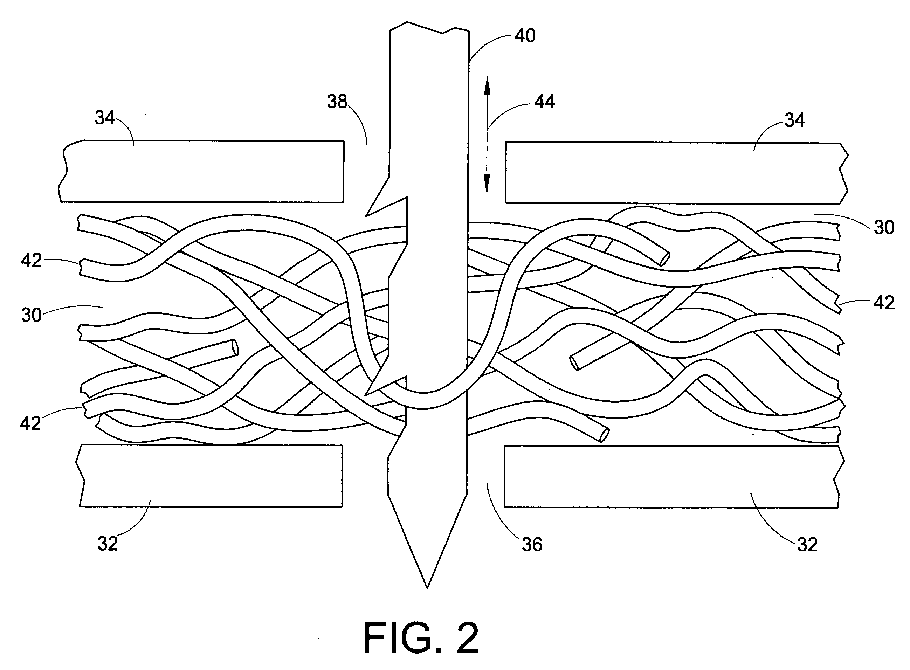

As shown in Fig. 2, needling includes passing the formed paper 30 in a still wet condition between a bed plate 32 and a stripper plate 34. Aperture 36 within bed plate 32 and aperture 38 within stripper plate 34 permit barbed needles 40 to pass therethrough in a reciprocating manner, as indicated by arrow 44. The needles 40 push and pull fibers 42 in the paper 30 to induce an entangling three dimensional interlocking orientation to the fibers 42, strengthening the paper 30 which is subsequently dried in an oven.

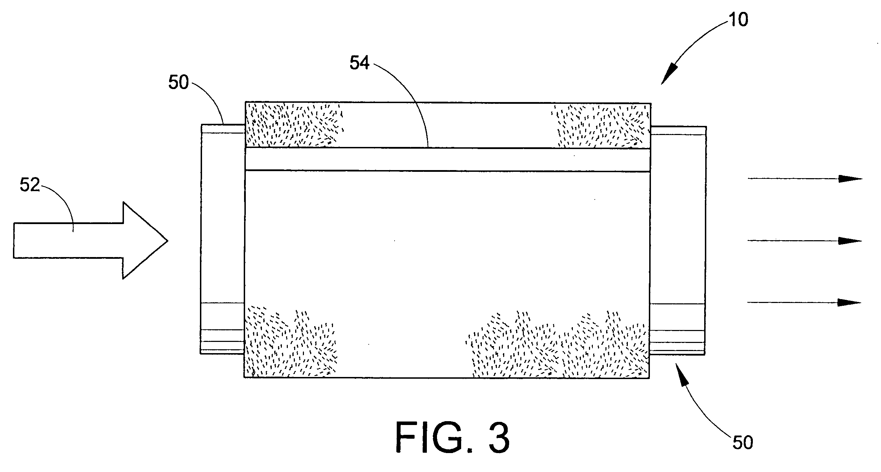

As shown in Fig. 3, the insulation paper mat 10 was tested for its thermal properties by being wrapped around a stainless steel exhaust pipe 50 (SS304) along shrinkage seam 54. Hot air 52 was passed through the stainless steel pipe 50 at about 600°C to simulate hot exhaust gas in an automotive exhaust downpipe application. Both the subject insulation mat 10 and a leached silica type mat were installed at a 6 mm thickness and a basis weight of 1000 g/m². Thermal pictures were taken at 5, 10, 15, and 20 minutes, and final results were obtained at 30 minutes. Thermal imaging of the exterior of the insulation mat 10 revealed a cold face temperature of 91.7°C. A comparison was made to a leached silica based mat tested in the same manner, which exhibited a cold face temperature of 105.9°C. The subject insulation mat 10 was therefore more efficient in retaining the thermal energy within the pipe 50, rather than permitting it to dissipate to the exterior of the system.

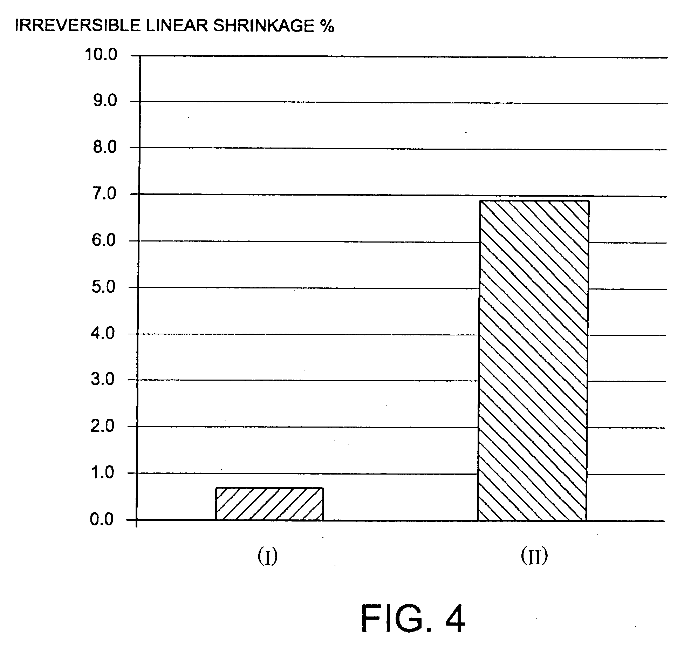

In order to test shrinkage, samples of a biosoluble fiber insulation mat and a leached silica fiber mat were subjected to heating at 1100°C for 24 hours. As shown in Fig. 4, the leached silica fiber mat (referred to as (II) in Fig. 4) shrank about 7%, while the biosoluble inorganic fiber insulation mat (referred to as (I) in Fig. 4) shrank less than 1%.

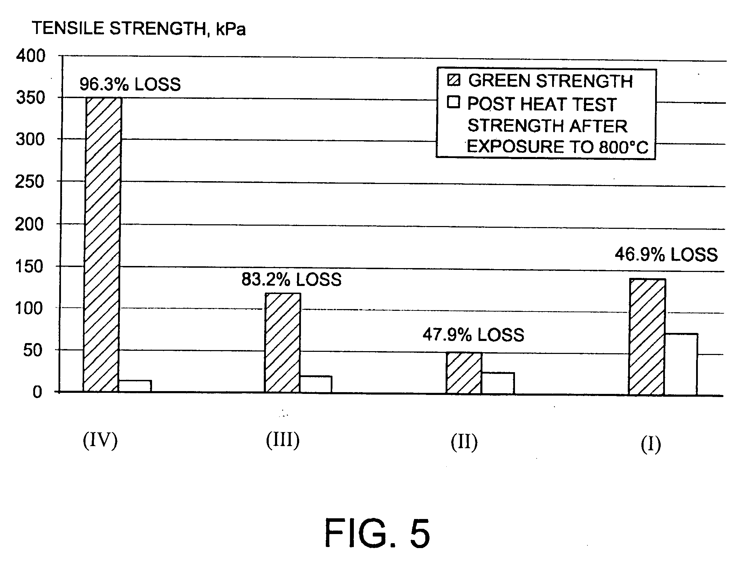

Samples of a biosoluble fiber insulation mat, leached silica fiber mat, a polycrystalline alumina mat as well as a non-intumescent catalytic converter insulation mat were tested to determine tensile strength, both in a green condition (that is, dried but not subjected to the heat of a simulated automotive exhaust application), and after exposure to 800°C. Fig. 5 shows the results of the testing wherein (I) refers to the biosoluble fiber insulation mat, (II) refers to the leached silica fiber mat, (III) refers to the polycrystalline alumina mat, and (IV) refers to the non-intumescent catalytic converter insulation mat. These results indicate that the biosoluble fiber insulation mat (I) experienced the lowest percentage decrease in tensile strength after exposure to the high temperature. Further, the biosoluble fiber insulation mat (I) exhibited the highest after - exposure tensile strength of the mats tested.

Samples of a biosoluble fiber insulation mat and a polycrystalline alumina mat were tested for vibration resistance, simulated to reproduce the vibration experienced in an automotive application over the lifetime of the mat. The mats were first heated at 700°C for 10 hours. The test protocol predicted failure when the change in vibration frequency exceeded 10%. The polycrystalline alumina mat failed at about 19 hours, while the biosoluble fiber insulation mat exhibited substantially constant frequency for the duration of the 25 hour test.

The subject insulation mat is made with bio-soluble fiber as its major constituent. The subject insulation mat has significantly lower unit cost than the polycrystalline alumina fiber mats which are proposed for use in automotive exhaust gas system applications. The subject insulation mat exhibits significantly lower thermal shrinkage than mats prepared from leached silica fiber material. The subject insulation mat is also formulated to contain a lower organic binder content, so that odor and smoke generation is minimized during initial start up in an automotive application.

The binder may be added to the subject insulation mat formulation for ease of handling and installation. The binder provides a smoother, less irritating surface and also provides flexibility. However, due to the wet-needling process used in the production of the subject insulation mat, there is not sole reliance on an organic binder to hold the mat together during production, installation and operation. Even after any organic binder present is burned out, the subject insulation mat is still held together by the needled fiber structure of the mat. Therefore, the subject insulation mat is vibration resistant even at high temperature.

Unlike catalytic converter mounting mat materials, the subject insulation mat can be used without having to keep it under any significant pressure. In other words, the insulation mat does not need to be compressed to a target density (gap bulk density) in order to stay intact while in operation under typical automotive exhaust system vibration and temperature conditions, particularly in 'hot-end' exhaust insulation applications. Nevertheless, in the typical operating environment, the insulation mat may have a thin covering, such as a thin sheet of metal, to protect it from impact and the general environment. However, the insulation mat need not be sealed against the outside environment. For example, in certain applications, the edges may be exposed to air or moisture.

The non-intumescent biosoluble fiber insulation mat exhibits good insulation values (better than air gap), resistance to moisture and salt for durability in the automotive environment, elevated temperature resistance (up to 1000°C), flexibility for ease of installation around complex shapes, and increased radial vibration durability. The subject insulation mat exhibits a high tensile strength which is sufficient to allow the mat to remain in place after exposure to high temperature, and has a low organics content (in some embodiments less than about 3%) for low binder burn-off during initial heating and low loss on ignition. The subject mats are less expensive than high performance converter mats such as polycrystalline alumina mats, while providing superior performance.

The biosoluble fiber insulation mats are useful for insulating automotive exhaust applications such as downpipe, manifold and muffler insulation, as well as catalytic converter inlet and outlet cone insulation. The subject insulation mats are also suitable for use as automotive heat shields. The subject insulation mats may also be used to wrap heat generating elements within fuel cells.

The insulation mat and apparatus or devices incorporating the insulation mat are not limited to the illustrative embodiments described above, but include variations, modifications and equivalent embodiments defined by the following claims. The embodiments described above are not necessarily in the alternative, as various embodiments may be combined to provide the desired characteristics.

## Claims

1. A high strength substantially non-expanding inorganic bio-soluble fiber insulation mat adapted for use in automotive exhaust systems comprising high temperature resistant alkaline earth silicate fibers, at least one inorganic binder, and optionally additional non-respirable inorganic fibers, wherein the insulation mat has a structure of partially interlocking fibers and an organics content of less than 20 weight percent prior to exposure to temperatures of at least 600°C, wherein the at least one inorganic binder comprises at least one of colloidal silica, colloidal alumina, colloidal zirconia, or mixtures thereof.

2. The insulation mat of claim 1, wherein said biosoluble fibers comprise the fiberization product of magnesia and silica.

3. The insulation mat of claim 2, wherein the biosoluble fibers comprise
(a) the fiberization product of 65 to 86 weight percent silica, 14 to 35 weight percent magnesia and 5 weight percent or less impurities; or,
(b) the fiberizatian product of 70 to 86 weight percent silica, 14 to 30 weight percent magnesia and 5 weight percent or less impurities; or,
(c) the fiberization product of 70 to 80 weight percent silica, 18 to 27 weight percent magnesia and 0 to 4 weight percent impurities.

4. The insulation mat of claim 1, wherein biosoluble fibers comprise the fiberization product of calcia, magnesia and silica.

5. The insulation mat of claim 4, wherein the biosoluble fibers comprise:
(a) the fiberization product of 45 to 90 weight percent silica, greater than 0 to 45 weight percent calcia, and greater than 0 to 35 weight percent magnesia or
(b) the fiberization product of 60 to 70 weight percent silica, from 16 to 35 weight percent calcia, and from 4 to 19 weight percent magnesia; or,
(c) the fiberization product of 61 to 67 weight percent silica, from 27 to 33 weight percent calcia, and from 2 to 7 weight percent magnesia.

6. The insulation mat of claim 1, wherein the insulation mat comprises from 50 to 100 weight by percent of the biosoluble inorganic fibers.

7. The insulation mat of claim 6 wherein the non-respirable inorganic fibers comprise at least one of silica fibers, leached silica fibers, S-glass fibers, S2 glass fibers, E-glass fibers, fiberglass fibers, chopped continuous mineral fibers, or combinations thereof.

8. The insulation mat of claim 1, further comprising at least one organic binder.

9. The insulation mat of claim 8, wherein the organic binder comprises at least one of latexes of acrylic or (meth)acrylic, copolymers of styrene and butadiene, vinyl pyridine, acrylonitrile, copolymers of acrylonitrile and styrene, vinyl chloride, polyurethane, copolymers of vinyl acetate and ethylene, polyamides, silicones, unsaturated polyesters, epoxy resins, polyvinyl esters, polyvinyl acetate, polyvinyl butyrate, polyvinyl alcohol fibers, polyethylene fibers, polypropylene fibers, acrylic fibers, polyester fibers, ethyl vinyl acetate fibers, nylon fibers, or combinations thereof; optionally wherein the organic binder comprises an acrylic latex.

10. The insulation mat of claim 8, wherein the inorganic binder further comprises clay; optionally wherein the clay comprises calcined and/or uncalcined attapulgite, ball clay, bentonite, hectorite, kaolininte, kyanite, montmorillonite, palygorskite, saponite, sepiolite, sillimanite, or combinations thereof.

11. The insulation mat of claim 1, wherein the insulation mat engages a downpipe of an automotive exhaust system.

12. The insulation mat of claim 1, wherein the insulation mat comprises cone insulation.

13. A process for producing the insulation mat of any of claims 1 - 12, comprising preparing a wet paper or sheet comprising the high temperature resistant fibers, the at least one inorganic binder, and optionally at least one of organic binder ; and intertwining or entangling the fibers in the wet paper or sheet prior to drying.

14. The process of claim 13 wherein said intertwining or entangling comprises at least one of needle punching or hydro-entangling the wet paper or sheet.

## Patentansprüche

1. Hochfeste, sich im Wesentlichen nicht ausdehnende Isoliermatte aus anorganischen biolöslichen Fasern, ausgelegt für die Nutzung in Kraftfahrzeug-Abgasanlagen, umfassend hochtemperaturbeständige Erdalkalisilicatfasern, mindestens ein anorganisches Bindemittel und gegebenenfalls zusätzliche nicht atmungsfähige, anorganische Fasern, wobei die Isoliermatte eine Struktur von teilweise ineinandergreifenden Fasern und einen Gehalt an organischen Verbindungen vor dem Aussetzen Temperaturen von mindestens 600 °C von weniger als 20 Gew.-% aufweist, wobei das mindestens eine anorganische Bindemittel mindestens eines von kolloidalem Siliciumdioxid, kolloidalem Aluminiumoxid, kolloidalem Zirconiumdioxid oder Gemische davon umfasst.

2. Isoliermatte nach Anspruch 1, wobei die biolöslichen Fasern das Defibrierungsprodukt von Magnesiumoxid und Siliciumdioxid umfassen.

3. Isoliermatte nach Anspruch 2, wobei die biolöslichen Fasern
(a) das Defibrierungsprodukt von 65 bis 86 Gew.-% Siliciumdioxid, 14 bis 35 Gew.-% Magnesiumoxid und 5 Gew.-% oder weniger Verunreinigungen; oder
(b) das Defibrierungsprodukt von 70 bis 86 Gew.-% Siliciumdioxid, 14 bis 30 Gew.-% Magnesiumoxid und 5 Gew.-% oder weniger Verunreinigungen; oder
(c) das Defibrierungsprodukt von 70 bis 80 Gew.-% Siliciumdioxid, 18 bis 27 Gew.-% Magnesiumoxid und 0 bis 4 Gew.-% Verunreinigungen umfassen.

4. Isoliermatte nach Anspruch 1, wobei die biolöslichen Fasern das Defibrierungsprodukt von Calciumoxid, Magnesiumoxid und Siliciumdioxid umfassen.

5. Isoliermatte nach Anspruch 4, wobei die biolöslichen Fasern:
(a) das Defibrierungsprodukt von 45 bis 90 Gew.-% Siliciumdioxid, mehr als 0 bis 45 Gew.-% Calciumoxid und mehr als 0 bis 35 Gew.-% Magnesiumoxid; oder
(b) das Defibrierungsprodukt von 60 bis 70 Gew.-% Siliciumdioxid, 16 bis 35 Gew.-% Calciumoxid und 4 bis 19 Gew.-% Magnesiumoxid; oder
(c) das Defibrierungsprodukt von 61 bis 67 Gew.-% Siliciumdioxid, 27 bis 33 Gew.-% Calciumoxid und 2 bis 7 Gew.-% Magnesiumoxid umfassen.

6. Isoliermatte nach Anspruch 1, wobei die Isoliermatte 50 bis 100 Gew.-% der biolöslichen anorganischen Fasern umfasst.

7. Isoliermatte nach Anspruch 6, wobei die nicht atmungsfähigen anorganischen Fasern mindestens eines von Siliciumdioxidfasern, gebleichten Siliciumdioxidfasern, S-Glasfasern, S2-Glasfasern, E-Glasfasern, Fiberglasfasern, geschnittenen Mineralendlosfasern oder Kombinationen davon umfassen.

8. Isoliermatte nach Anspruch 1, ferner umfassend mindestens ein organisches Bindemittel.

9. Isoliermatte nach Anspruch 8, wobei das organische Bindemittel mindestens eines von Acryl- oder (Meth)acryl-Latizes, Copolymeren von Styrol und Butadien, Vinylpyridin, Acrylnitril, Copolymeren von Acrylnitril und Styrol, Vinylchlorid, Polyurethan, Copolymeren von Vinylacetat und Ethylen, Polyamiden, Silikonen, ungesättigten Polyestern, Epoxidharzen, Polyvinylestern, Polyvinylacetat, Polyvinylbutyrat, Polyvinylalkoholfasern, Polyethylenfasern, Polypropylenfasern, Acrylfasern, Polyesterfasern, Ethylvinylacetatfasern, Nylonfasern oder Kombinationen davon umfasst; wobei das organische Bindemittel gegebenenfalls einen Acryllatex umfasst.

10. Isoliermatte nach Anspruch 8, wobei das anorganische Bindemittel ferner Ton umfasst; wobei der Ton gegebenenfalls kalziniertes und/oder nicht kalziniertes Attapulgit, Töpferton, Bentonit, Hectorit, Kaolinit, Kyanit, Montmorillonit, Palygorskit, Saponit, Sepiolit, Sillimanit oder Kombinationen davon umfasst.

11. Isoliermatte nach Anspruch 1, wobei die Isoliermatte das Flammrohr einer Kraftfahrzeug-Abgasanlage in Eingriff bringt.

12. Isoliermatte nach Anspruch 1, wobei die Isoliermatte eine Trichterisolierung umfasst.

13. Verfahren zur Herstellung der Isoliermatte nach einem der Ansprüche 1 - 12, umfassend das Herstellen eines nassen Papiers oder Blattes, umfassend die hochtemperaturbeständigen Fasern, das mindestens eine anorganische Bindemittel und gegebenenfalls mindestens ein organisches Bindemittel; und das Verflechten oder Verwirren der Fasern in dem nassen Papier oder dem Blatt vor dem Trocknen.

14. Verfahren nach Anspruch 13, wobei das Verflechten oder Verwirren mindestens eines von Nadeln oder Hydro-Verwirren des nassen Papiers oder Blattes umfasst.

## Revendications

1. Matelas isolant en fibres inorganiques biosolubles à haute résistance sensiblement non expansibles apte à être utilisé dans des systèmes d'échappement d'automobile comprenant des fibres de silicate alcalino-terreux résistant aux hautes températures, au moins un liant inorganique, et optionnellement des fibres inorganiques non respirantes supplémentaires, dans lequel le matelas isolant présente une structure de fibres partiellement enchevêtrées et une teneur en organiques inférieure à 20 pour cent en poids avant une exposition à des températures d'au moins 600°C, dans lequel ledit au moins un liant inorganique comprend au moins une parmi la silice colloïdale, l'alumine colloïdale, la zircone colloïdale ou des mélanges de celles-ci.

2. Matelas isolant selon la revendication 1, dans lequel les fibres biosolubles comprennent le produit du fibrage de magnésie et de silice.

3. Matelas isolant selon la revendication 2, dans lequel les fibres biosolubles comprennent:
(a) le produit du fibrage de 65 à 86 pour cent en poids de silice, de 14 à 35 pour cent en poids de magnésie, et de 5 pour cent en poids, ou moins, d'impuretés; ou
(b) le produit du fibrage de 70 à 86 pour cent en poids de silice, de 14 à 30 pour cent en poids de magnésie, et de 5 pour cent en poids, ou moins, d'impuretés; ou
(c) le produit du fibrage de 70 à 80 pour cent en poids de silice, de 18 à 27 pour cent en poids de magnésie, et de 0 à 4 pour cent en poids d'impuretés.

4. Matelas isolant selon la revendication 1, dans lequel les fibres biosolubles comprennent le produit du fibrage d'oxyde de calcium, de magnésie et de silice.

5. Matelas isolant selon la revendication 4, dans lequel les fibres biosolubles comprennent:
(a) le produit du fibrage de 45 à 90 pour cent en poids de silice, de plus de 0 à 45 pour cent en poids d'oxyde de calcium, et de plus de 0 à 35 pour cent en poids de magnésie; ou
(b) le produit du fibrage de 60 à 70 pour cent en poids de silice, de 16 à 35 pour cent en poids d'oxyde de calcium, et de 4 à 19 pour cent en poids de magnésie; ou
(c) le produit du fibrage de 61 à 67 pour cent en poids de silice, de 27 à 33 pour cent en poids d'oxyde de calcium, et de 2 à 7 pour cent en poids de magnésie.

6. Matelas isolant selon la revendication 1, dans lequel le matelas isolant comprend de 50 à 100 pour cent en poids des fibres inorganiques biosolubles.

7. Matelas isolant selon la revendication 6, dans lequel les fibres inorganiques non respirantes comprennent au moins un type de fibres parmi des fibres de silice, des fibres de silice lessivées, des fibres de verre S, des fibres de verre S2, des fibres de verre E, des fibres de fibre de verre, des fibres minérales continues hachées ou des combinaisons de celles-ci.

8. Matelas isolant selon la revendication 1, comprenant en outre au moins un liant organique.

9. Matelas isolant selon la revendication 8, dans lequel le liant organique comprend au moins un parmi des latex d'acrylique ou de (méth)acrylique, des copolymères de styrène et de butadiène, le vinyle pyridine, l'acrylonitrile, des copolymères d'acrylonitrile et de styrène, du chlorure de vinyle, le polyuréthane, des copolymères d'acétate de vinyle et d'éthylène, des polyamides, des silicones, des polyesters insaturés, des résines époxy, des esters de polyvinyle, l'acétate de polyvinyle, le butyrate de polyvinyle, des fibres d'alcool polyvinylique, des fibres de polyéthylène, des fibres de polypropylène, des fibres d'acrylique, des fibres de polyester, des fibres d'acétate d'éthyle vinyle, des fibres de nylon ou des combinaisons de ceux-ci; optionnellement dans lequel le liant organique comprend un latex acrylique.

10. Matelas isolant selon la revendication 8, dans lequel le liant organique comprend en outre l'argile; optionnellement dans lequel l'argile comprend l'attapulgite calcinée et/ou non calcinée, l'argile plastique, la bentonite, l'hectorite, la kaolinite, la cyanite, la montmorillonite, la palygorskite, la saponite, la sépiolite, la sillimanite ou des combinaisons de celles-ci.

11. Matelas isolant selon la revendication 1, dans lequel le matelas isolant engage un tuyau de descente d'un système d'échappement d'automobile.

12. Matelas isolant selon la revendication 1, dans lequel le matelas isolant comprend une isolation à cônes.

13. Procédé de production du matelas isolant selon l'une quelconque des revendications 1 à 12, comprenant la préparation d'un papier ou d'une feuille humide contenant des fibres résistant aux hautes températures, ledit au moins un liant inorganique, et optionnellement au moins un liant organique; et l'entrelacement ou l'enchevêtrement des fibres dans le papier ou la feuille humide avant un séchage.

14. Procédé selon la revendication 13, dans lequel ledit entrelacement ou enchevêtrement comprend au moins un parmi un aiguilletage ou un hydro-enchevêtrement du papier ou de la feuille humide.
